Europäisches Patentamt

European Patent Office

Office européen des brevets

(11) Publication number: **0 350 207**
A2

## EUROPEAN PATENT APPLICATION

(21) Application number: 89306605.0

(22) Date of filing: 29.06.89

(51) Int. Cl.⁴: **H04B 10/20 , H04B 10/24**

(30) Priority: 06.07.88 US 215831

(43) Date of publication of application:
10.01.90 Bulletin 90/02

(84) Designated Contracting States:
DE ES FR GB NL SE

(71) Applicant: **AMERICAN TELEPHONE AND TELEGRAPH COMPANY**
550 Madison Avenue
New York, NY 10022(US)

(72) Inventor: Snyder, David Alan
Pleasant Valley Schoolhouse R.D. 1
Coopersburg Pennsylvania 18036(US)

(74) Representative: Johnston, Kenneth Graham et al
AT&T (UK) LTD. AT&T Intellectual Property Division 5 Mornington Road
Woodford Green Essex, IG8 OTU(GB)

(54) Transceiver-based single fiber lan.

(57) An optical communication network is disclosed which utilizes optical transceiving elements (e.g., 12) at each node (e.g., 10) within the network. A token passing protocol may be utilized to control information flow between the nodes in the network, where the network may be configured in one of many different star and bus configurations, including, but not limited to, reflective star or bus, active star or bus, and linked star or bus. The optical transceiving element may be either an LED (surface-emitting or edge-emitting) or a semiconductor laser.

EP 0 350 207 A2

## TRANSCEIVER-BASED SINGLE FIBER LAN

### Background of the Invention

### 1. Field of the Invention

The present invention relates to an optical fiber-based local area network (LAN) and, more particularly, to a transceiver-based, single fiber LAN.

### 2. Description of the Prior Art

The proliferation of high-speed communication systems, including mainframe computers, personal computers, remote terminals, printers, etc., has resulted in the formation of local area networks (LANs) to control the communication between the various devices. As first conceived, these LANs were conventional electrical systems which utilized one of a number of standard protocols to control information flow. A token-passing ring LAN which is capable of supporting data, text, video and speech traffic is one such example. The token-passing protocol, as is well-known in the art, controls the communication flow by allowing only the station which has possession of the "token" to transmit information onto the network.

Conventional LANs suffer from a number of limitations which may be solved by utilizing an optical fiber-based LAN. In particular, conventional electronic LANs may not perform adequately in industrial settings, where various forms of electromagnetic radiation may introduce noise and other spurious signals into the communication system. Additionally, the number of electrical communication lines required to connect the various stations in the network may become physically overwhelming. Optical fibers, in contrast, are so small that a complete doubling of the network size would place little or no burden on the physical size of the fiber interconnection. Lastly, fiber networks offer an increase in transmission speed over their electrical counterparts.

One prior art LAN which includes a combination of the conventional electrical LAN with a fiber LAN is disclosed in U.S. Patent 4,641,375 issued to A. Dean on February 3, 1987. As disclosed, one bus (communication line) of a conventional LAN of the Ethernet type is replaced by a star coupler connected via optical fiber pairs to a number of additional stations. The optical portion of the system necessarily utilizes the same protocols as the remaining buses from the Ethernet system. An alternative fiber optic LAN is disclosed in U.S.

Patent 4,654,889 issued to H. B. Shutterly on March 31, 1987. In the Shutterly arrangement, the various terminal devices on the network are grouped into sub-networks which are connected to a bus, with token passing or collision detection being localized to individual sub-networks, and with communication between sub-networks being conducted over the bus via non-interfering optical channels.

While these and other fiber optic LAN arrangements are improvements over the conventional systems, problems remain with the interconnection of the optical devices to the system. For example, each station on the network comprises a light transmitting element (LED or laser), a fiber coupled to the transmitting element, a light receiving element (photodiode), and a fiber coupled to the receiving element. If a single fiber communication system is desired (to reduce the number of fibers entering and leaving each station), the fibers coupled to the transmit and receive devices must be coupled together and then connected to the single transmitting fiber. Each of these connections introduces loss into the system, where in certain applications the amount of introduced signal attenuation becomes unacceptable.

Thus, a need remains in the prior art for a fiber optic LAN which overcomes these and other limitations.

### Summary of the Invention

The need remaining in the prior art is addressed by the present invention which relates to an optical fiber-based local area network (LAN) and, more particularly to a transceiver-based single fiber LAN which utilizes a token passing protocol.

In accordance with the present invention, the transmitting LED or laser is also used as the receiving optical device, thus eliminating the need for a separate photodetector and its package. Since the optical device cannot be in both states simultaneously, the system is inherently half-duplex. Therefore, the transmitter and receiver circuitry may be combined in a single integrated circuit.

In association with a laser-based embodiment of the present invention, a backface monitor is included with the laser transmitter (the backface conventionally utilized to servo-control the laser drive current during transmission so that a fixed launch power is maintained) is utilized as the light receiving portion of the receiver circuitry, where in this mode the laser is biased near (but below) threshold so that the incoming light will be amplified and transferred to the backface monitor.

Other and further attributes of the present invention will become apparent during the course of the following discussion and by reference to the accompanying drawings.

## Brief Description of the Drawing

Referring now to the drawings, where like numerals represent like parts in several configurations:

FIG. 1 illustrates an exemplary information station, or node, which may be utilized to form the LAN of the present invention, the station utilizing a surface-emitting LED as the light transceiving element and including both the transmit and receive electrical circuitry;

FIG. 2 illustrates an alternative information station, or node, configured in accordance with the present invention, this particular station utilizing an edge-emitting LED as the light transceiving element and including both the transmit and receive electrical circuitry;

FIG. 3 illustrates yet another alternative information station, or node, configured in accordance with the present invention, the embodiment of FIG. 3 utilizing a semiconductor laser and its associated backface monitor as a light transceiving element, the station also including the necessary transmit and receive electrical circuitry;

FIG. 4 illustrates an exemplary reflective star LAN which may be formed using any of the information stations illustrated in FIGs. 1, 2, or 3;

FIG. 5 illustrates an exemplary reflective bus LAN which may be formed using any of the information stations illustrated in FIGs. 1, 2, or 3;

FIG. 6 illustrates an exemplary linked reflective star LAN which may be formed using any of the information stations illustrated in FIGs. 1, 2 or 3;

FIG. 7 illustrates an exemplary active star LAN which may be formed using any of the information stations illustrated in FIGs. 1, 2, or 3; and

FIG. 8 illustrates an exemplary master/slave polling LAN which may be formed using any of the information stations illustrated in FIGs. 1, 2, or 3.

## Detailed Description

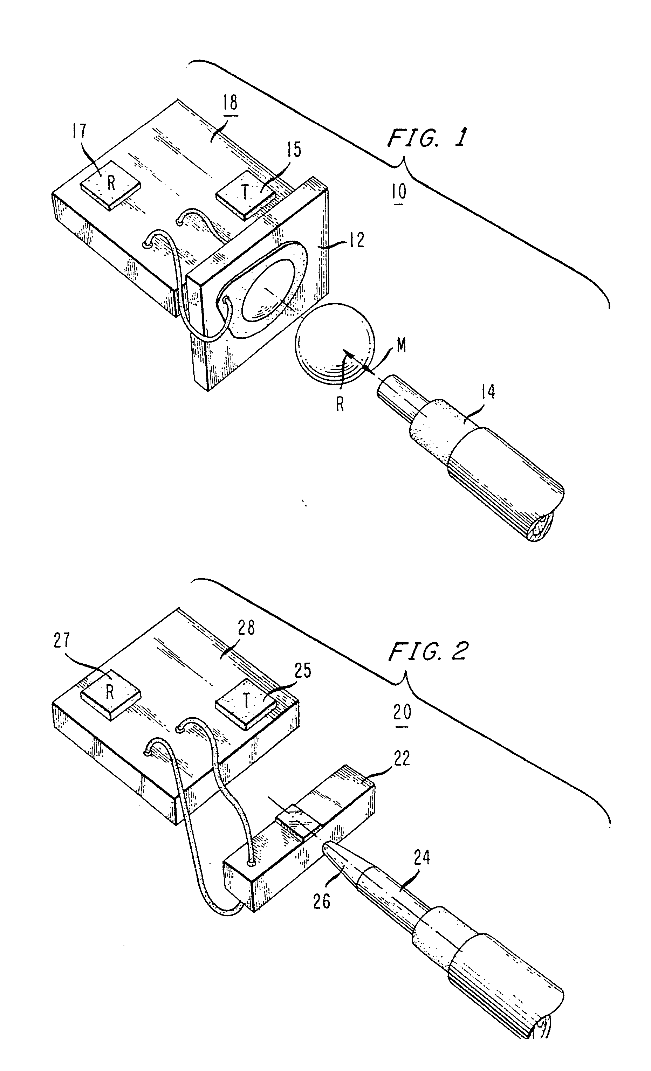

An exemplary information station, or node 10 formed in accordance with the present invention is illustrated in FIG. 1. Node 10 includes a surface-emitting LED 12 which is coupled to a multimode optical fiber 14 via a lensing element 16 such that the core region of fiber 14 is aligned with the active area of LED 12. LED 12 is further coupled to a transmit/receive integrated circuit 18, as shown in FIG. 1. It is to be understood that LED 12 may in fact be fabricated on the same substrate as the transmit/receive circuitry 18 so as to form a completely monolithic structure. In its transmitting mode, surface-emitting LED 12 is connected to transmit circuitry 15 and will radiate an outgoing message signal M which passes through lens 16 and enters fiber 14. To receive a message, LED 12 is biased at zero volts (or alternatively, backbiased) and acts as a photodiode, transforming any received light signal R into an electronic equivalent. This electronic equivalent is then passed along to receive circuitry 17.

In an alternative embodiment, surface-emitting LED 12 may be replaced by an edge-emitting LED. An exemplary information station 20 utilizing such an element is illustrated in FIG. 2. Here, an edge-emitting LED 22 is coupled to a single mode fiber 24, where the end portion 26 of single mode fiber 24 is tapered to form a lensing/coupling element between edge-emitting LED 22 and single mode fiber 24. Similar to the arrangement of FIG. 1, an integrated circuit 28 includes both the transmit circuitry 25 and receive circuitry 27, and may be further modified to include edge-emitting LED 22 as part of the monolithic structure. In operation, information station 20 functions in an identical manner as station 10 described above.

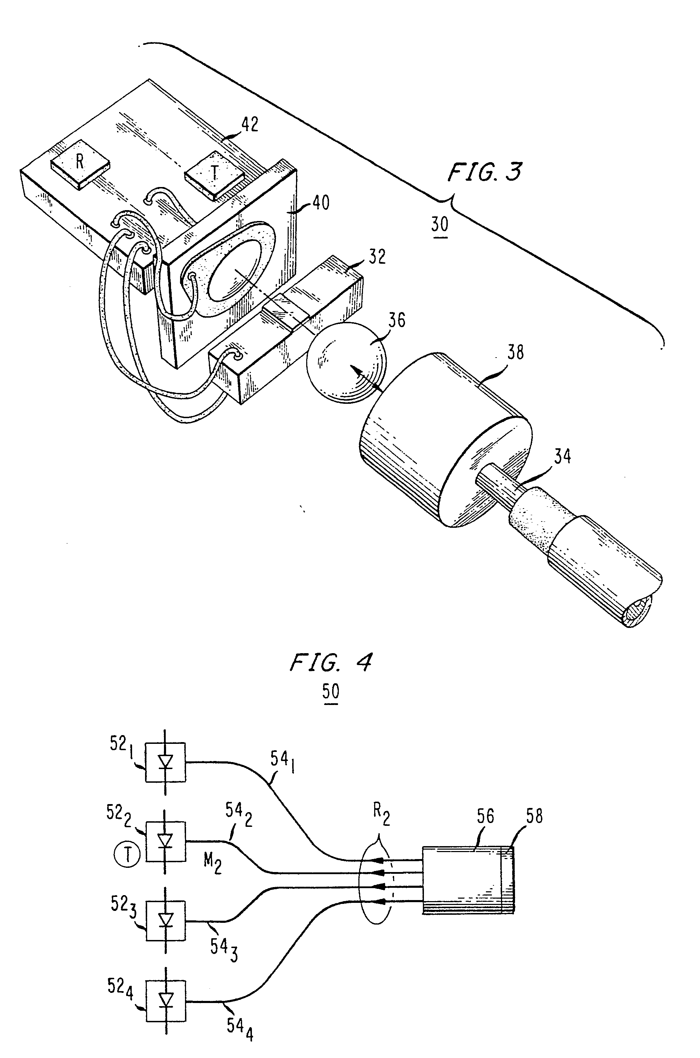

As discussed above, an information station of the present invention may also utilize a semiconductor laser (and its associated backface monitor) as the lightwave transceiving element. One such exemplary information station 30 is depicted in FIG. 3. A semiconductor laser 32 is connected to a single mode fiber 34 by an optical coupling device, in this particular example a silicon spherical lens 36 and a graded index (GRIN) rod lens 38 disposed in a confocal arrangement. A backface monitor 40, for example, a PIN photodiode, is positioned behind the rear facet of laser 32. An integrated circuit 42, including transmit circuitry 44 and receive circuitry 46, is illustrated in FIG. 3 as connected to both laser 32 and photodiode monitor 40.

A local area network (LAN) formed with any of the above-described information stations may operate, for example, with the token-passing protocol. The operation of one such station using this type of protocol (a laser-based station) will be briefly described. However, it is to be understood that protocol arrangements other than token passing may be used, and that the token-passing protocol is equally applicable to LED-based as well as laser-based information stations.

In accordance with the token-passing protocol, a laser-based node 30 will usually be in its receiving, or listening mode, waiting for the reception of the token signal before beginning its transmission.

There are two possible listening modes. Either laser 32 is slightly backbiased by receiver circuit 46 and incoming light is detected by laser 32, or laser 32 is biased by receiver circuit 46 to remain near (but under) threshold. Thus, incoming light signal from fiber 34 will be amplified by laser 32 and directed towards backface monitor 40. The output from backface monitor 40, which is an electrical signal, is subsequently transmitted to receive circuitry 46. The received signal may be either a received message signal R destined for node 30, or a message signal destined for another node in the network. Circuit 46 is so designed to be able to discriminate between these various signals. When the token signal T is received by node 30, receiver circuit 46 will transmit a control signal C to transmit circuit 44, allowing node 30 to begin its transmission. In particular, the reception of control signal C by transmitter circuit 44 causes circuit 44 to both bias laser 32 in the active mode and modulate the light output from laser 32 so as to form the broadcasted message signal M. Thus, in accordance with the token-passing configuration of the present system, transmitter circuit 44 may only activate laser 32 when the system token has been received.

With the understanding of the basic operation of an exemplary information station in a token-passing LAN, the following discussion will describe several networks which may be formed in accordance with the present invention by various means of linking these stations together.

FIG. 4 illustrates an exemplary reflective star network 50 which is formed using a plurality of the nodes as described above in association with FIGs. 1, 2 or 3. For the purposes of the present discussion, it will be assumed that the networks will employ laser-based information stations. However, it is to be understood that these networks may also use the LED-based stations illustrated in FIGs. 1 and 2. Referring back to FIG. 4, reflective star network 50 includes four information stations (hereinafter referred to as "nodes"), labeled $52_1$, $52_2$, $52_3$, and $52_4$. Each node has an associated communication fiber $54_1$-$54_4$, respectively, exiting the node. Fibers $54_1$-$54_4$ are coupled to a reflective star coupler 56, where coupler 56 comprises a lensing arrangement which is capable of receiving a lightwave signal transmitted along any of the fibers $54_1$-$54_4$. As shown in FIG. 4, reflective star coupler 56 includes a rear reflecting surface 58 upon which the received signal will impinge and be redistributed among all of the fibers attached to coupler 56. For the arrangement illustrated in FIG. 4, node $52_2$ is designated as being in possession of the transmitting token T. Thus, node $52_2$ transmits its message signal $M_2$ along fiber $54_2$ to reflective star coupler 56. Message signal $M_2$ will then be redirected by reflecting surface 58 into all

of the fibers $54_1$-$54_4$ connected to coupler 56 and retransmitted (rebroadcast) into the network as a "received" signal $R_2$ to all nodes on the network. As shown, signal $R_2$ will also be transmitted back to node $52_2$, which may either ignore this signal or check for errors in its broadcasted message. Once the broadcast from node $52_2$ is completed, node $52_3$ will receive token signal T and initiate its transmission. If this node has no information to transmit at that moment, the token will immediately be transferred to node $52_4$, where the entire process will begin again.

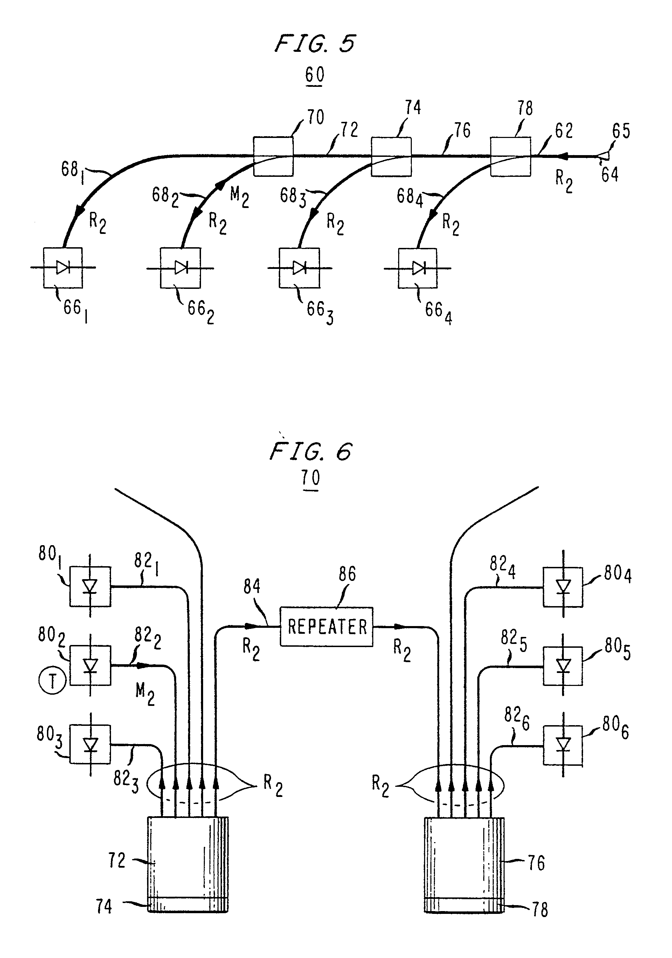

One problem with this configuration is that there may be size limitations on the physical number of fibers which may be directly coupled to a collecting element such as reflective star coupler 56. A solution to this problem is to utilize a reflective bus configuration as illustrated in FIG. 5. Here, a reflective bus 60 includes a single fiber 62 coupled to a reflecting element 64, as opposed to the N fiber connection of the star configuration of FIG. 4. As before, assume that there are four nodes, designated $66_1$-$66_4$, connected to network 60, where node $66_2$ is in possession of token T and transmits its message signal $M_2$ along an associated fiber $68_2$. As shown in FIG. 5, fiber $68_2$ terminates in a coupling device 70, where the remaining input to coupling device 70 is fiber $68_1$ from node $66_1$. Coupling device 70 functions to redirect message signal $M_2$ along ouput fiber 72, where fiber 72 is subsequently applied as an input to a second coupling device 74. As shown in FIG. 5, the remaining input to second coupling device 74 is output fiber $68_3$ from node $66_3$. In a similar manner, second coupling device 74 functions to redirect any incoming message signal into output fiber 76. Output fiber 76, as shown, is then coupled as a first input to a third coupling device 78, where fiber $68_4$ from node $66_4$ is applied as the remaining input to third coupling device 78. The output from third coupling device 78 is the single fiber 62 defined above as coupled to reflecting element 64. In this example, therefore, message signal $M_2$ from node $66_2$ will pass through coupling devices 70, 74, 78 and fibers 72, 76 and 62, eventually being applied as an input to reflecting element 64. As above, reflecting element 64 includes a reflecting surface 65 which merely reverses message signal $M_2$ and redirects it (as received signal $R_2$) back into fiber 62. Received signal $R_2$ then travels the reverse path and is eventually received by each node $66_1$-$66_4$.

The arrangements of FIGs. 4 and 5 may both exhibit size limitations in terms of the number of nodes which may interact via a single reflecting element. This limitation is in reality a power budget limitation, since the power of the signal broadcast by the transmitting node must not only be sufficient to propagate back, but must also be sufficient to be divided and distributed through the transmission medium to the reflecting element and among the many nodes or receivers. Thus, any network with a large number of nodes (over one hundred, for example) would not be an appropriate candidate for either of the configurations illustrated in FIGs. 4 or 5. An alternative configuration which is better suited for this type of network may be defined as a linked star network and is illustrated in FIG. 6.

Linked star network 70 of FIG. 6 overcomes the network size problem by utilizing a plurality of reflecting couplers, with linking means joining the couplers together. For the sake of simplicity, the linked star network 70 of FIG. 6 is illustrated as including only two such reflecting couplers. However, it is to be understood that any number N of such couplers could be linked together in a similar fashion. Referring to FIG. 6, linked star 70 is seen to comprise a first reflecting coupler 72, with an associated reflecting surface 74, and a second reflecting coupler 76, with an associated reflecting surface 78. As shown, three nodes $80_1$-$80_3$ are connected to first reflecting star 72 via their respective optical fibers $82_1$-$82_3$. Similarly, a set of three nodes $80_4$-$80_6$ are connected to second reflecting star 76 via their respective optical fibers $82_4$-$82_5$. A linking fiber 84 is utilized to couple first reflecting coupler 72 to second reflecting coupler 76, with a repeater 86 being inserted along fiber 84 to reshape the signal being transmitted between the couplers.

In operation, linked star network 70 varies little from the reflective star described above in association with FIG. 4. Assuming node $80_2$ is in possession of the token, it will broadcast its message signal $M_2$ which will enter first reflecting coupler 72 and be reflected into the plurality of fibers attached to first reflecting element 72, communication fibers $82_1$-$82_3$ as well as linking fiber 84. Thus, message signal $M_2$ will be received directly by nodes $80_1$-$80_3$ and will enter repeater 86 inserted in fiber 84. Subsequent to being reshaped, message signal $M_2$ will continue to propagate along linking fiber 84 and enter second reflecting coupler 76. As before, the signal will be reflected off of surface 78 and redirected into fibers $82_4$-$82_5$ for reception by nodes $80_4$-$80_6$.

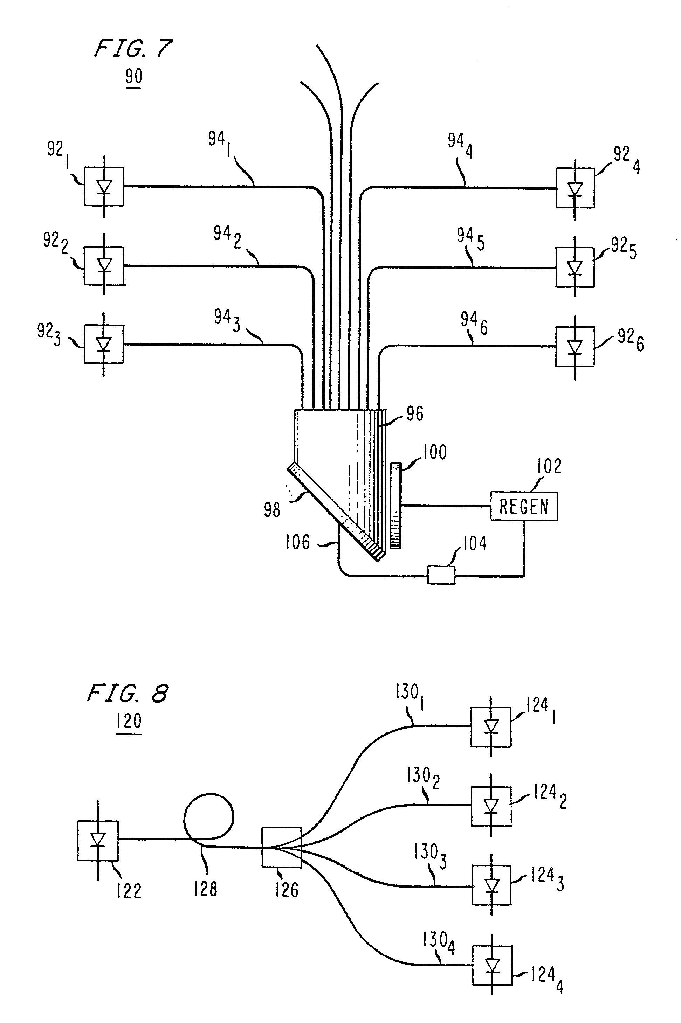

An alternative embodiment, defined as an active star network, is illustrated in FIG. 7. Like the linked star, an active star is able to accommodate a large number of users on its network, by virtue of the signal regeneration which is performed prior to the rebroadcast in the network. In particular, active star 90 of FIG. 7 comprises a plurality of nodes, designated $91_1$-$92_6$, similar to those described above, where a plurality of fibers $94_1$-$94_6$ exiting these nodes are coupled to a mixing rod 96. A reflecting surface 98 is disposed at the opposite end of mixing rod 96 and functions to redirect any incoming message signal into a photodiode 100. As is well-known in the art, photodiode 100 will convert the incoming optical message signal into an electrical equivalent. This electrical equivalent is subsequently passed through a regenerator 102 and utilized to drive a laser 104. The regenerated message signal produced by laser 104 then propagates along a fiber 106 and reenters mixing rod 96 through reflecting surface 98. Advantageously, laser 104 operates at a different wavelength than the transceiving devices at the nodes. In this case, reflecting surface 98 may be a dichroic mirror which will reflect the incoming wavelength (into the photodiode) and fully pass the outgoing wavelength (from laser 104), with very little, if any, interference between the two signals. Another advantage to using a regenerating laser at a different wavelength is that it is possible to shift the frequency of the received message signal to a transceiver wavelength which is more efficient. For example, a transceiving laser which broadcasts at 0.87 $\mu$m is not a very good photodetector at this wavelength. If laser 104 associated with active star 90 is designated to transmit at a lower frequency, 0.82 $\mu$m, for example, this will move the spectrum into an area which is a better absorber for the transceiving devices.

The various above-described networks of FIGs. 4-7 are all suitable for broadcast applications, that is, where each node in the network is to receive the information being broadcast. There are many applications, however, when it is desired to transmit a message to only a selected number of nodes in the system. For these applications, therefore, any type of reflective network is not a very appropriate arrangement. An alternative arrangement for these applications is a master/slave polled network, as illustrated in FIG. 8. In this particular arrangement, a master/slave polled network 120 comprises a master node 122 and a plurality of slave nodes $124_1$-$124_4$, interconnected by a 1xN splitter/combiner 126 (N being defined as the number of slave nodes connected to network 120). As shown, master node 122 is coupled via fiber 128 to splitter/combiner 126, where the output of splitter/combiner 126 is a plurality of fibers $130_1$-$130_4$, each fiber coupled to its respective slave node $124_1$-$124_4$. In operation, master node 122 polls slave nodes $124_1$-$124_4$ one at a time, where the slave nodes respond in turn. In this particular configuration, therefore, a different message may be transmitted to each slave node.

It is to be understood that there exist many other network arrangements which may utilize the transceiver-based nodes as disclosed in the present invention. For example, the linked star configuration of FIG. 6 may be replaced by a linked bus. In a similar fashion, the active star of FIG. 7 may be replaced by an active bus. Additionally, it is to be noted that it is not essential for the token passing protocol to be utilized with this particular network. It is indeed the preferred protocol, since the nodes may operate only in a half-duplex mode. However, there exist other protocols, such as that used in the Aloha network, which may also operate successfully with a half-duplex network.

**Claims**

1. An optical communication network including a plurality of nodes, each node (e.g. 10) for both transmitting information into and receiving information from the network
CHARACTERIZED IN THAT each node comprises:
optical transceiving means (e.g., 12) for generating a message signal when biased at threshold and for receiving and amplifying a message signal from another node when otherwise biased;
transmitting means (e.g., 15) coupled to the optical transceiving means for providing the bias threshold and message signal;
receiving means (e.g., 17) coupled to the optical transceiving means for generating an electrical output signal from the received amplified message signal; and
an optical communication fiber (e.g., 14) coupled to the output of said optical transceiving means,
the optical communication network further comprising
a retransmission element coupled to the plurality of nodes, said retransmission element for receiving a message signal transmitted by a node of said plurality of nodes and redirecting said message signal into the optical communication network.

2. An optical communication network as defined in claim 1 wherein the network utilizes a token passing protocol to control information flow through the network.

3. An optical communication network as defined in claims 1 or 2 wherein the network is defined as a reflective star network, the retransmission element comprising
optical collecting means coupled at a first endface to the plurality of optical fibers exiting the plurality of nodes; and
a reflective surface disposed at a second, opposite endface of the optical collecting means for reflecting a received message signal through said optical collecting means and into each optical fiber of said plurality of optical fibers.

4. An optical communication network as defined in claim 3, wherein the network comprises a plurality of reflective stars linked together by optical fiber.

5. An optical communication network as defined in claims 1 or 2 wherein the network is defined as an active star network, the retransmission element comprising
optical collecting means coupled at a first endface to the plurality of optical fibers exiting the plurality of nodes;
photodetecting means for transforming any received optical message signal into an electrical representation;
regenerating means responsive to the electrical representation provided by the photodetecting means for providing as an output an improved electrical representation of the received message signal; and
optical amplifying means for converting the output of the regenerating means into an amplified optical signal, said amplified optical signal being applied as an input to the optical collecting means for retransmission into the communication network.

6. An optical communication network as defined in claims 1 or 2 wherein the network is defined as a reflective bus network, the retransmission element comprising
optical collecting means including a reflective surface;
a bus optical fiber coupled to the optical collecting means such that any message signal propagating along said bus optical fiber impinges said reflective surface and is redirected into said bus optical fiber; and
distributed node coupling means disposed along said bus optical fiber for coupling the plurality of nodes to said bus optical fiber.

7. An optical communication network as defined in claims 1 or 2 wherein the network is defined as a master/slave polled network, the retransmission element comprising
an optical fiber splitter/combiner coupled to the plurality of optical communication fibers exiting the plurality of nodes for combining said plurality of fibers into a single master optical fiber; and
a master node coupled to the single master optical fiber for receiving a message signal broadcast by any node of said plurality of nodes and transmitting a master message signal to selected nodes of said plurality of nodes.

8. An optical communication network as defined in claims 1 or 2 wherein at least one node of the plurality of nodes includes a surface-emitting LED as the optical transceiving means and multimode optical fiber coupled by a lensing element to the surface-emitting LED.

9. An optical communication network as defined in claims 1 or 2 wherein at least one node of the plurality of nodes includes an edge-emitting LED as the optical transceiving means and lensed single mode optical fiber coupled to the edge-emitting LED.

10. An optical communication network as defined in claims 1 or 2 wherein at least one node of the plurality of nodes comprises

a semiconductor laser optical transceiving means;

a semiconductor laser backface monitor photodetecting means; and

single mode optical communication fiber coupled to said semiconductor laser with an optical lensing arrangement.

11. An optical communication network as defined in claim 10 wherein the backface monitor comprises a PIN photodiode.

12. An optical communication network as defined in claim 10 wherein the optical lensing arrangement comprises a spherical lens disposed at the output of the semiconductor laser and a graded index rod lens disposed between said spherical lens and the single mode optical communication fiber.

*FIG. 1*

*FIG. 2*

*FIG. 3*

<u>30</u>

*FIG. 4*

<u>50</u>

*FIG. 5*

<u>60</u>

*FIG. 6*

<u>70</u>

FIG. 7
90

FIG. 8
120